# EUROPÄISCHE PATENTSCHRIFT

(11) **EP 1 063 754 B1**
(45) Veröffentlichungstag und Bekanntmachung des Hinweises auf die Patenterteilung: **12.12.2007**
(21) Anmeldenummer: 00890195.1
(22) Anmeldetag: 23.06.2000
(51) Int. Cl.: H02K 21/12, H02K 21/22, H02K 1/14

(54) **Transversalflussmaschine**
Transversal flux machine
Machine à flux transversal

(30) Priorität: 22.06.1999 AT 109899
(43) Veröffentlichungstag der Anmeldung: 27.12.2000
(73) Patentinhaber: Bombardier Transportation GmbH, 13627 Berlin (DE)
(72) Erfinder: Schäfer, Uwe, 16761 Hennigsdorf (DE); Güntensperger, Walter, 8426 Lufingen (CH); Stockmayer, Michael, 2700 Wr. Neustadt (AT); Hackmann, Wilhelm, 2371 Hinterbrühl (AT); Neudorfer, Harald, 2514 Traiskirchen (AT)
(74) Vertreter: Sonn, Helmut

(56) Entgegenhaltungen:
- EP-A- 0 762 618
- DE-A- 19 833 021
- US-A- 5 051 641
- US-A1- 2002 175 586

## Beschreibung

Die Erfindung betrifft eine Transversalflussmaschine mit über den Umfang des Rotors der Maschine angeordneten Permanentmagneten in einer Anzahl entsprechend der Polzahl der Maschine und allenfalls zwischen den Permanentmagneten angeordneten Flussleitstücken aus magnetisch leitfähigem Material, und mit über den Umfang des Stators der Maschine angeordneten Polelementen zur Aufnahme von Wicklungen zur Erzeugung eines magnetischen Flusses und zur Leitung des magnetischen Flusses, wobei zumindest ein Teil der Polelemente des Stators der Maschine aus magnetischem Sintermaterial besteht.

Transversalflussmaschinen zeichnen sich durch einen besonderen, dreidimensional verlaufenden, magnetischen Fluss aus, wobei im Gegensatz zu herkömmlichen elektrischen Maschinen magnetische Flusslinien auch in transversaler Richtung, d.h. parallel zur Drehachse der Maschine verlaufen, was auch zur Namensgebung dieser Maschinen geführt hat. Bei Transversalflussmaschinen wird mit Hilfe von Ringwicklungen am Stator ein magnetisches Feld erzeugt, welches über entsprechende Polelemente über den Luftspalt zum Rotor verläuft und dort mit Hilfe von Permanentmagneten und allenfalls Flussleitstücken konzentriert und in seiner Richtung geleitet wird. Üblicherweise sind die Polelemente am Stator aus weichmagnetischem Material aufgebaut. Häufig werden lamellierte Bleche mit einer Lamellierungsrichtung parallel zur Drehachse der Maschine verwendet. Die Polelemente weisen meist U-Form bei einphasigen Transversalflussmaschinen bzw. entsprechende Kammform bei mehrphasigen Transversalflussmaschinen auf, wobei zwischen den in Richtung des Rotors weisenden Schenkeln der Polelemente die Ringwicklung angeordnet ist. Zum leichteren Aufbau der Maschine können die Polelemente geteilt ausgeführt sein. Lamellierte Bleche weisen in Richtung der Ebene der Bleche eine sehr gute magnetische Leitfähigkeit auf, während sie normal zu der Ebene der Bleche eine sehr schlechte magnetische Leitfähigkeit zeigen. Dementsprechend ist beim dreidimensionalen Verlauf des magnetischen Flusses bei Transversalflussmaschinen in jenen Bereichen, wo die magnetischen Feldlinien normal zur Lamellierungsrichtung verlaufen, mit relativ hohen Eisenverlusten zu rechnen.

Darüber hinaus sind die Streuverluste bei Transversalflussmaschinen zwischen den Polelementen des Stators und an den in Richtung des Rotors weisenden Enden der Polelemente relativ hoch.

Die US 5,051,641 A beschreibt eine Transversalflussmaschine, welche zur Reduktion der Streuflusskomponenten des Ankers speziell angeordnete Polelemente aufweist. Die Weicheisenelemente im Rotor und Stator können aus geschichteten Blechen oder verdichtetem Eisenpulver hergestellt werden.

Die WO 99/01924 A1 beschreibt eine nach dem Reluktansprinzip funktionierende elektrische Maschine, bei der ein Teil der Polelemente des Stators aus Korn orientiertem Material besteht.

Ziel der vorliegenden Erfindung ist die Reduktion der magnetischen Verluste im Stator, sodass die Leistungsausbeute und der Wirkungsgrad der Maschine erhöht werden kann. Unter die magnetischen Verluste im Stator fallen insbesondere die Eisenverluste sowie die durch Streufelder hervorgerufenen Verluste.

Die erfindungsgemäße Aufgabe wird dadurch gelöst, dass zumindest die im Wesentlichen parallel zur Drehachse der Maschine verlaufenden Stege der Polelemente, in welchem der magnetische Fluss von der radialen Richtung abweicht, aus magnetischem Sintermaterial bestehen. Bei Verwendung lamellierter Bleche verläuft die Lamellierungsebene in der Regel in der radialen Richtung. Daher sollten insbesondere jene Bereiche wo der magnetische Fluss normal auf die radiale Richtung bzw. die Lamellierungsebenen steht, also Transversal, d.h. parallel zur Drehachse der Maschine oder tangential zur Drehachse der Maschine verläuft, aus magnetischen Sintermaterial aufgebaut werden. Dadurch können in jenen Bereichen, die normalerweise sehr schlechte magnetisch Leitfähigkeit bei der Verwendung von Blechpaketen aufweisen, die Verluste weiter reduziert werden und somit die Leistungsausbeute der Maschine erhöht werden. In den Stegen verläuft der magnetische Fluss transversal, d.h. parallel zur Drehachse der Maschine. Die magnetischen Sintermaterialen sind zwar zum gegenwärtigen Zeitpunkt noch teurer als lamellierte Bleche, jedoch ist die Herstellung insbesondere komplizierterer Formen durch Sintern wesentlich einfacher. Die Sintermaterialien bestehen aus Eisen, Nickel oder Kobaldpartikel, welche mit geeigneten Beschichtungen versehen sind und durch geeignete Bindematerialien miteinander verbunden werden.

Gemäß einem weiteren Merkmal der Erfindung bestehen zumindest die Pole der im wesentlichen normal auf die Drehachse der Maschine stehenden Schenkel der Polelemente aus magnetischem Sintermaterial. Auch in diesen Bereichen weist die Verwendung magnetischer Sintermaterialien Vorteile auf, da in diesen Bereichen die Flussrichtung dreidimensional ist und somit Verluste durch Streufelder zu erwarten sind.

Gemäß einem weiteren Merkmal der Erfindung besteht ein Teil der Polelemente des Stators der Maschine aus lamellierten Blechen, wobei die Lamellierungsebene im wesentlichen normal zur Drehachse der Maschine steht. Durch eine derartige Kombination von magnetischem Sintermaterial und lamellierten Blechen, können wesentliche Reduktionen der Verluste bewirkt werden, indem die Materialien an die jeweilige Richtung des magnetischen Flusses angepasst wird. Dementsprechend wird dort, wo der magnetische Fluss radial verläuft ein Dynamoblech und dort wo der magnetische Fluss transversal verläuft ein Sintermaterial eingesetzt. Die lamellierten Bleche weisen in Blechrichtung bessere magnetische Eigenschaften auf als die Sintermaterialien, jedoch dort, wo der magnetische Fluss seine Richtung ändert, d.h. im Übergangsbereich von radialer Richtung zu tangentialen Richtung, sind in Summe die Sintermaterialien vorzuziehen.

Vorteilhafterweise sind die zum Rotor der Maschine weisenden Schenkel der Polelemente sowie ein Teil der im wesentlichen parallel zur Drehachse der Maschine verlaufenden Stege der Polelemente des Stators durch lamellierte Bleche gebildet. Dadurch können die Verluste bedingt durch die Streuung im Bereich der Pole reduziert und die Eisenverluste im Bereich der Stege der Polelemente ebenfalls verringert werden. Zur besseren Herstellbarkeit ist ein Teil der im wesentlichen parallel zur Drehachse der Maschine verlaufenden Stege der Polelemente ebenfalls durch die Bleche gebildet, sodass die einzelnen in Richtung des Rotors weisenden Teile der Polelemente miteinander durch den Steg verbunden werden. Somit sind die Polelemente des Stators aus einzelnen scheibenförmigen Blechen aufgebaut, welche leicht durch Stanzwerkzeuge hergestellt werden können. Die scheibenförmigen Bleche werden vorteilhafterweise einmal entlang ihres Umfangs durchtrennt und allenfalls isoliert, sodass Probleme bedingt durch Wirbelströme vermieden werden können.

In diesem Fall können die in Richtung des Rotors der Maschine weisenden Pole der Polelemente an deren Enden zur Bildung von Polschuhen gebogen sein. Dabei sind die Bleche jeweils eines Blechpaketes in die gleiche Richtung gebogen, während die Bleche des nächsten benachbarten Blechpaketes in die Gegenrichtung gebogen sind. Dadurch entstehen sogenannte Polschuhe, welche eine Vergrößerung der momentenbildenden Oberfläche mit sich bringen und somit eine Drehmomentsteigerung. Darüber hinaus kann der magnetische Fluss durch die entsprechende Gestaltung des Blechpaketes in eine bevorzugte Richtung gelenkt werden und der Streufluss nach außen vermindert werden.

Gemäß einem weiteren Merkmal der Erfindung sind die lamellierten Bleche zu Blechpaketen zusammengefasst, welche gegeneinander, im wesentlichen um eine Polteilung oder ungeradzahlige Vielfache der Polteilung, verdreht sind. Die Polteilung ist definiert durch das Verhältnis des wirksamen Umfanges zwischen Rotor und Stator der Maschine zur Polzahl. Durch diese Verdrehung bzw. Versetzung der Polelemente können die üblicherweise verwendeten I-Joche am Rotor der Maschine zur Schließung der magnetischen Feldlinien entfallen, wodurch die Eisenverluste verringert und das resultierende Drehmoment und somit der Wirkungsgrad der Maschine erhöht werden können.

Zur leichteren Positionierung und Fixierung an den benachbarten Teilen des Stators weisen die aus magnetischem Sinteraterial bestehenden Teile der Polelemente des Stators Ausformungen auf, welche in entsprechend komplementär gestaltete Ausformungen der benachbarten Teile des Stators eingreifen können. Dadurch kann insbesondere eine werkzeuglose und Verbindung ohne zusätzliche Hilfsmittel erreicht werden. Solche Ausformungen können widerhakenartig ausgebildet sein, sodass eine Verschiebung der Teile zueinander unterbunden werden kann.

Bei der Verwendung von magnetischen Sintermaterialien können nahezu beliebige Gestaltungen der Polelemente erzielt werden, welche bei Verwendung von Blechen nicht möglich wären. Dementsprechend ist gemäß einem weiteren Merkmal der Erfindung vorgesehen, dass die gesamten Polelemente des Stators aus magnetischem Sintermaterial bestehen. Dadurch kann eine Kostenreduktion gegenüber geblechten Varianten erzielt werden.

Wenn die Polelemente mehrstückig hergestellt sind, wobei die einzelnen Teile der Polelemente über komplementär gestaltete Ausformungen miteinander verbunden sind, kann eine einfache Herstellung erzielt werden.

Insbesondere, wenn die Polelemente einstückig hergestellt werden, kann der Zusammenbau der üblicherweise aus einer sehr großen Anzahl von Einzelteilen bestehenden Transversalfluss-maschinen erheblich erleichtert werden.

Gemäß einem weiteren Erfindungsmerkmal ist vorgesehen, dass die Schenkel und/oder Stege der Polelemente in Richtung des Rotors im wesentlichen keilförmig auseinanderlaufen und in Richtung der Pole zusammenlaufen. Durch die Verbreiterung der Schenkel resultiert eine größere Querschnittsfläche, wodurch in diesem Bereich die magnetische Induktion verringert und somit die Eisenverluste reduziert werden. An den Enden der Schenkel müssen die Pole wieder verjüngend ausgebildet werden, sodass die am Rotor gegenüberliegenden Permanentmagnete durch die Pole nicht magnetisch kurz geschlossen werden, was zu einer Reduktion bzw. Auslöschung des resultierenden Drehmomentes führen würde.

Zwischen den Schenkeln der Polelemente können Dämpfungseinlagen aus elastischem Material, beispielsweise aus Gummi, angeordnet sein. Diese bringen eine Dämpfung bzw. Verringerung der mechanischen Belastung durch Vibrationen zwischen den einzelnen Polelementteilen mit sich und bewirkt darüber hinaus die notwendige Isolierung der einzelnen Polelemente.

Diese und weitere Merkmale der Erfindung sind in den nachfolgenden Abbildungen näher erläutert. Darin zeigen Fig. 1 eine Prinzipskizze eines Teiles einer Transversalflussmaschine zur Erläuterung des magnetischen Flussverlaufes, Fig. 2 die Eisenverluste in Abhängigkeit der Frequenz und die magnetische Permeabilität in Abhängigkeit der magnetischen Feldstärke zur Erläuterung der Unterschiede von magnetisch isotropem Material zu lamellierten Blechen, Fig. 3 eine Ausführungsform der erfindungsgemäßen Polelemente des Stators einer Transversalflussmaschine im Querschnitt, Fig. 4a und 4b die Gestaltung der Pole der lamellierten Polelemente, Fig. 5 die Ausführung der Pole der Polelemente in Form von magnetisch isotropem Material, Fig. 6a bis 6c Ausführungsformen der Erfindung mit vollständig aus magnetisch isotropem Material hergestellten Polelementen, und Fig. 7a und 7b zwei Ausführungsformen der Polelemente im Querschnitt.

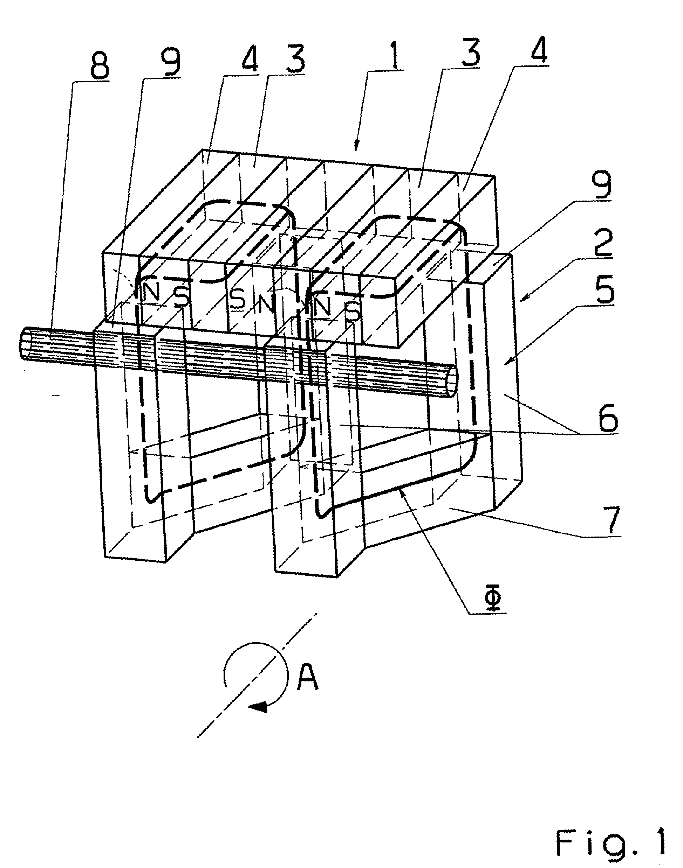

Fig. 1 zeigt einen dreidimensionalen Ausschnitt aus einer Transversalflussmaschine in Form eines Außenläufers (d.h. der rotierende Teil der Maschine liegt außen) zur Veranschaulichung des magnetischen Flussverlaufes. Am Rotor 1 der Transversalflussmaschine, in diesem Fall des Außenläufers, sind über den Umfang Permanentmagnete 3 in einer Anzahl entsprechend der Polzahl 2p der Maschine und zwischen den Permanentmagneten 3 Flussleitstücke 4 aus magnetisch leitfähigem Material angeordnet. Die Drehachse der Maschine ist mit Bezugszeichen A angedeutet. In der gezeichneten Anordnung der abwechselnden Permanentmagnete 3 und Flussleitstücke 4 am Rotor 1 der Maschine sind die Permanentmagnete 3 in tangentialer Richtung magnetisiert. Durch die Kennzeichnung des Nordpoles N und Südpoles S der Permanentmagnete 3 wird die Magnetisierungsrichtung veranschaulicht. Am Stator 2 der Maschine sind magnetisch leitfähige Polelemente 5 angeordnet, welche üblicherweise in U-Form bzw. Kammform bei entsprechend mehrphasigen Transversalflussmaschinen vorliegen. Zwischen den radial angeordneten Schenkeln 6 der Polelemente verläuft der Steg 7. Zwischen den Schenkeln 6 der Polelemente 5 ist die Wicklung 8, welche meist in Form einer Ringwicklung vorliegt, angeordnet, welche das Magnetfeld im Stator hervorruft. Der magnetische Fluss Φ verläuft, wie in der Darstellung angedeutet, in einer dreidimensionalen Form, wobei teilweise radial über die Schenkel 6 der Polelemente 5 sowie transversal über den Steg 7 der Polelemente. Beim Aufbau der Polelemente 5 aus lamellierten Blechen wird zwar in Richtung der Bleche eine große magnetische Leitfähigkeit und somit geringe Eisenverluste bewirkt, aber normal dazu erhält man eine sehr niedrige magnetische Leitfähigkeit. Die Streufelder treten hauptsächlich zwischen den Polelementen 5 und an den Polen 9 am Luftspalt zwischen Rotor 1 und Stator 2 auf.

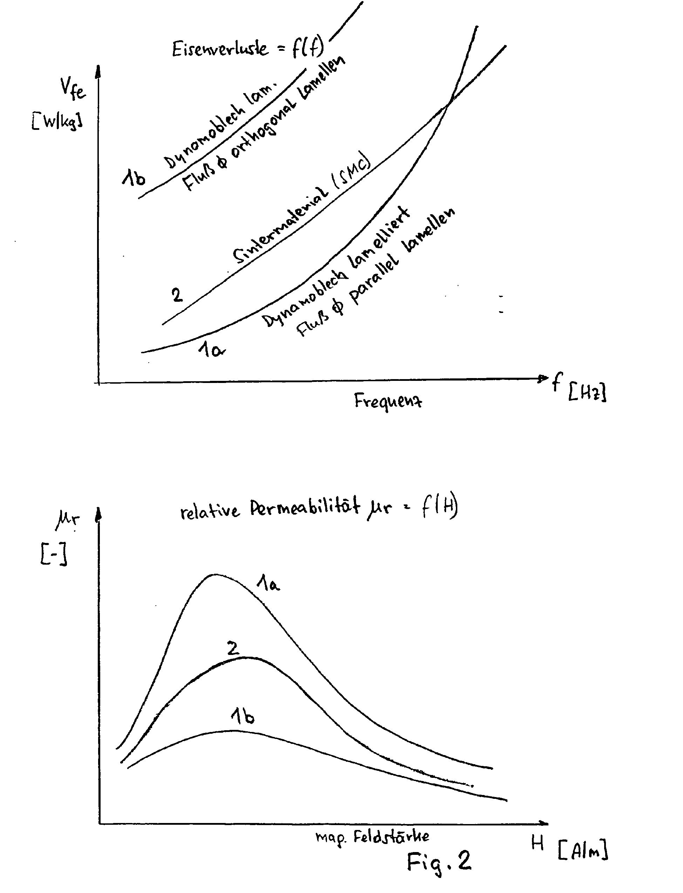

Fig. 2 zeigt den Verlauf der Eisenverluste in Abhängigkeit der Frequenz für magnetische Materialien aus Blechlamellen und aus Sintermaterial. Die oberste Kurvenform zeigt die Eisenverluste für lamelliertes Blech mit einer Lamellierungsrichtung quer zur Richtung des magnetischen Flusses Φ, daher sind die Eisenverluste relativ hoch. Die unterste Kurve zeigt die Eisenverluste für Dynamoblech mit einer Lamellierungsrichtung in Richtung der magnetischen Feldlinien. Bei derartigen Materialien sind die Eisenverluste minimal. Die Verluste bei magnetisch isotropen Materialien, wie z.B. magnetische Sinterwerkstoffen sind richtungsunabhängig und liegen größenmäßig etwa zwischen den Verlusten für die beiden Magnetisierungsrichtungen bei lamellierten Blechen. Liegen die magnetischen Feldlinien nur in einer Ebene vor, ist die Verwendung von Blechen vorzuziehen. Bei derartigen lamellierten Blechen stimmt die Lamellierungsrichtung mit der Feldlinienebene überein. Jedoch bei Transversalflussmaschinen, bei denen der magnetische Fluss nicht in einer Ebene liegt, sind in Summe gesehen die Verluste bei Sintermaterialien geringer. Die Abbildung der Permeabilität µ in Abhängigkeit der magnetischen Feldstärke H verdeutlicht die Eigenschaften von magnetischen Sintermaterialien.

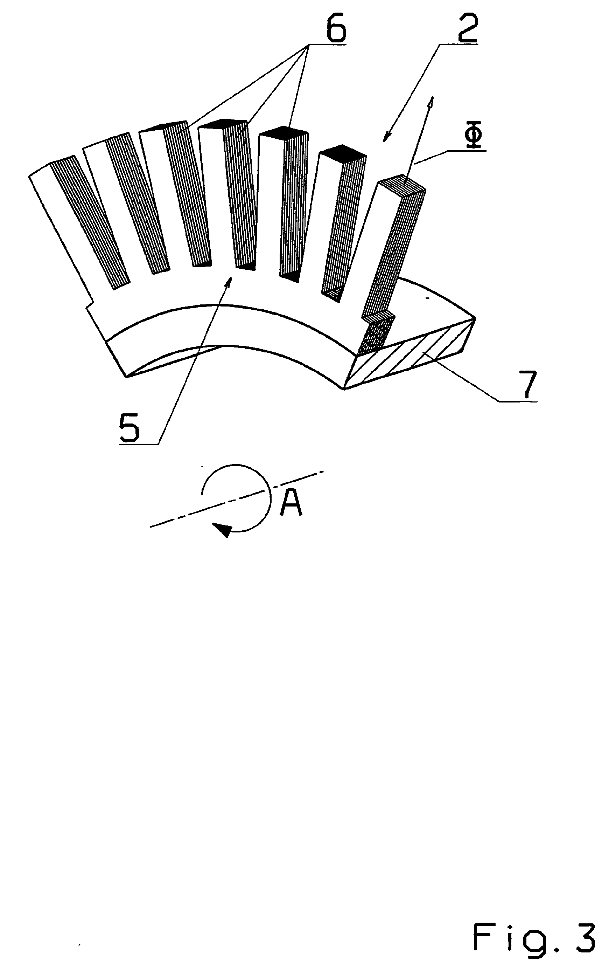

Fig. 3 zeigt eine Ausführungsform der Polelemente 5 des Stators 2, bei der die Teile der Polelemente 5, bei denen der magnetische Fluss transversal, d.h. parallel zur Drehachse A verläuft, das sind die Stege 7 der Polelemente 5, aus magnetischem Sintermaterial bzw. magnetisch isotropem Material hergestellt sind. Die Teile der Polelemente 5, bei denen der magnetische Fluss Φ radial verläuft, das sind die Schenkel 6 der Polelemente 5, können aus weichmagnetischem Material mit Lamellierungsrichtung normal zur Drehachse A aufgebaut sein.

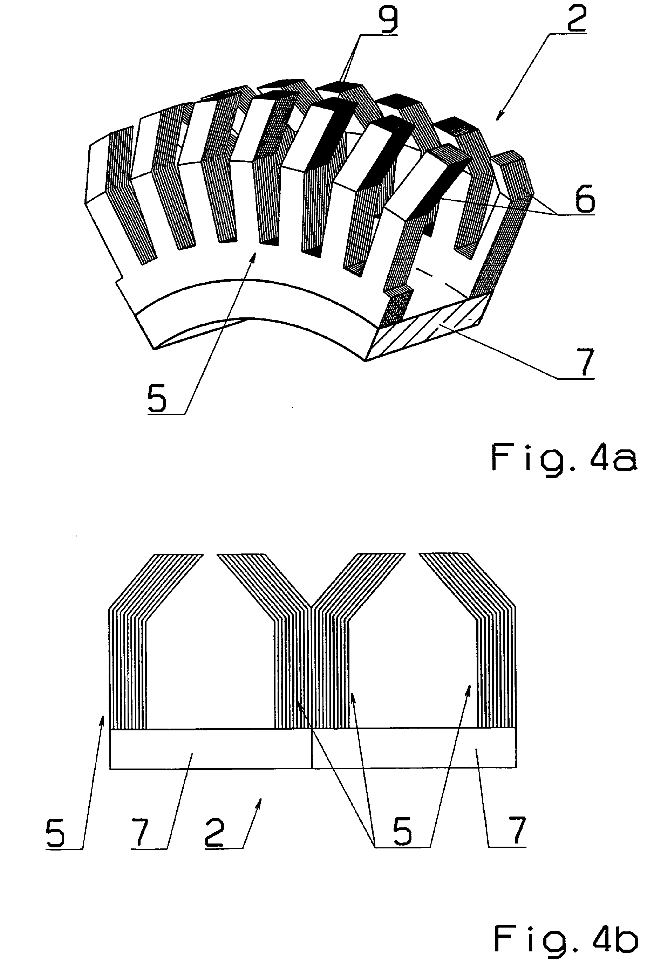

Fig. 4a und 4b zeigen eine Ausführungsform der Maschine, bei der die Schenkel 6 der Polelemente 5 durch Blechlamellenpakete aufgebaut sind, wobei die Pole 9 der Schenkel 6 der Polelemente 5 zur Vergrößerung der drehmomentenbildenden Oberfläche verbogen sind. Zum leichteren Aufbau der Maschine kann ein Teil des Steges 7 der Polelemente 5 ebenfalls durch lamellierte Bleche hergestellt sein, sodass die Polelemente 5 des Stators 2 aus einzelnen Scheiben, wie in Fig. 4a dargestellt, aufgebaut sind.

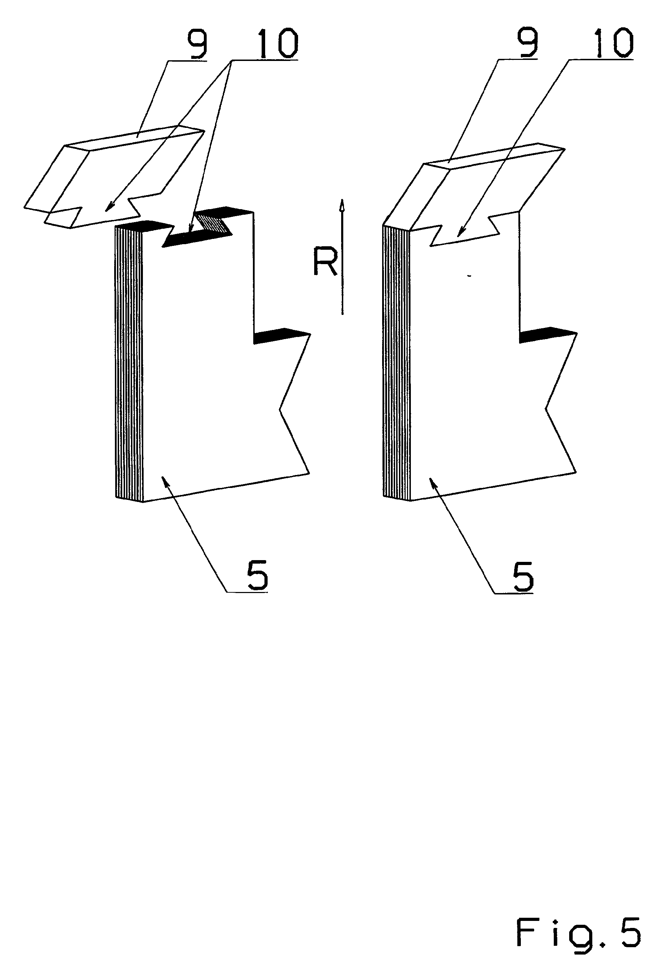

Fig. 5 zeigt eine Ausführungsform der Maschine, bei der die Pole 9 aus magnetisch isotropem Material hergestellt sind. Durch entsprechende Ausformungen 10 kann eine Verbindung mit den darunterliegenden Teilen der Polelemente 5 erfolgen, welche die richtige Positionierung der Pole 9 und eine Fixierung, insbesondere in radialer Richtung R gewährleistet.

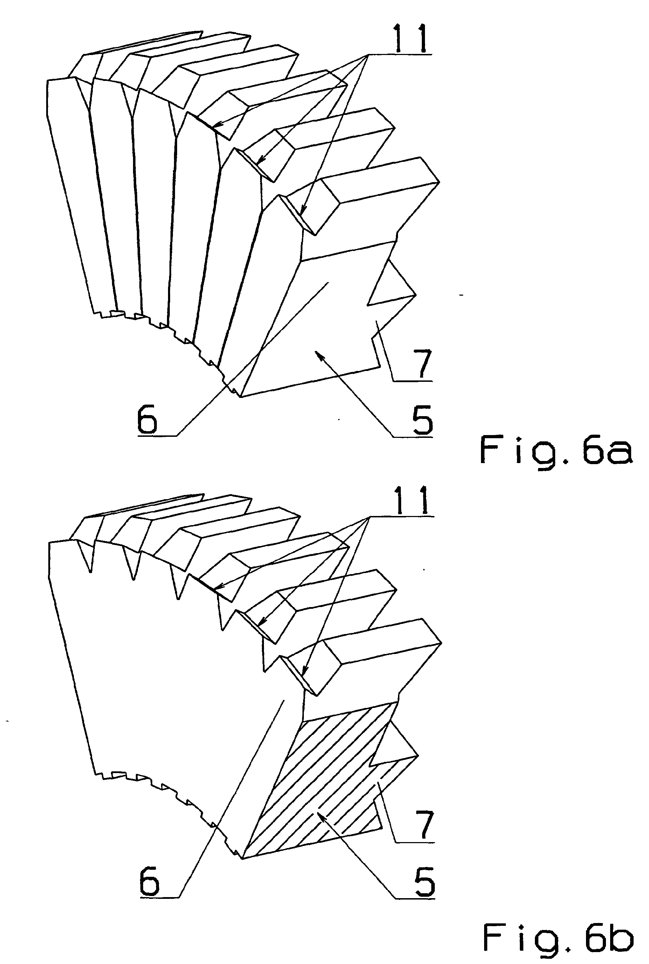

Wie in Fig. 6a dargestellt, können die Polelemente 5 auch gesamt aus magnetisch isotropem Material, insbesondere Sintermaterial, hergestellt sein. Insbesondere bei der Herstellung durch Sintern können fast beliebige Gestaltungen erreicht werden, wodurch eine Verbreiterung der Schenkel 6 der Polelemente 5 erreicht werden kann, was zu einer Vergrößerung der Fläche, somit zu einer Reduktion der magnetischen Induktion B und zu einer Reduktion der Eisenverluste führt. Gegen Ende der Schenkel 6 der Polelemente 5 müssen diese wieder verjüngend ausgebildet sein, sodass es nicht zu einem magnetischen Kurzschluss der am Rotor 1 angeordneten Permanentmagnete 3 und somit überhaupt zu einer Drehmomentenbildung kommt. Darüber hinaus können am Pol 9 der Polelemente 5 Nuten 11 vorgesehen werden, welche zur Bandagierung der Anordnung beim Aufbau der Maschine dienen.

Fig. 6b zeigt eine Variante, bei der die Polelemente 5 der gesamten Maschine einstückig in Form eines Ringes hergestellt sind. Ebenso können eine bestimmte Anzahl von Polelementen 5 einstückig in Form eines Ringsegmentes hergestellt werden und die gesamte Maschine aus einigen derartigen Ringsegmenten aufgebaut werden. In diesem Fall sind die Einzelteile vorzugsweise mit komplementär gestalteten Ausformungen 10 versehen, über die eine werkzeuglose Verbindung ohne zusätzliche Hilfsmittel möglich ist. Eine derartige Ausführung ist in Fig. 6c gezeigt, bei der die einzelnen Polelemente 5 mit angrenzenden Statorbauteilen und bzw. oder angrenzenden Polelementen 5 formschlüssig verbunden werden.

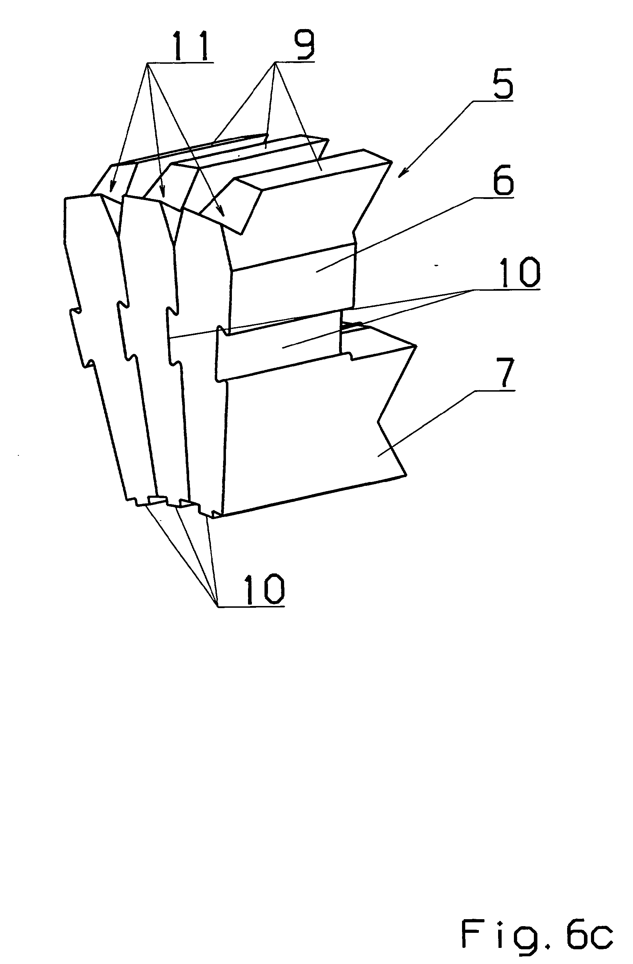

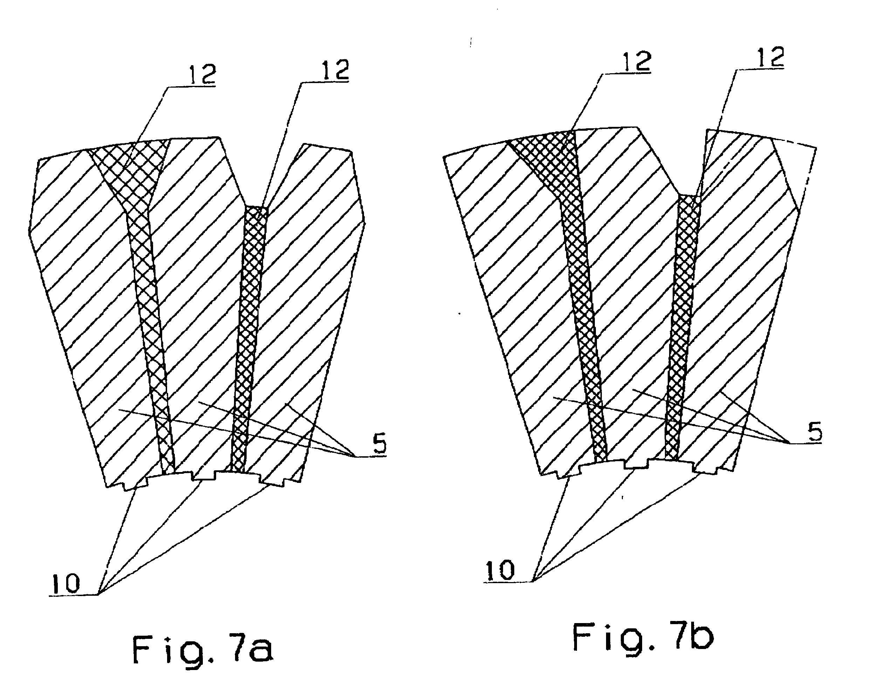

Wie in Fig. 7a dargestellt, können zwischen den Polelementen 5 Dämpfungseinlagen 12, beispielsweise aus Gummi, angeordnet sein, welche zu einer Isolierung der Polelemente 5 und zur Dämpfung bzw. Verminderung der mechanischen Belastung durch Vibrationen zwischen den einzelnen Polelementen 5 dienen. Der Polschuh kann auch unsymmetrisch aufgebaut sein, wie in Fig. 7b dargestellt. Dadurch kann der magnetische Fluss in eine Vorzugsrichtung gelenkt werden. Da aus Sintermaterial hergestellte Polelemente nahezu beliebige Formen annehmen können, ist eine derartige Gestaltung relativ einfach und kostengünstig erzielbar.

## Patentansprüche

1. Transversalflussmaschine mit über den Umfang des Rotors (1) der Maschine angeordneten Permanentmagneten (3) in einer Anzahl entsprechend der Polzahl (2p) der Maschine und allenfalls zwischen den Permanentmagneten (3) angeordneten Flussleitstücken (4) aus magnetisch leitfähigem Material, und mit über den Umfang des Stators (2) der Maschine angeordneten Polelementen (5) zur Aufnahme von Wicklungen (8) zur Erzeugung eines magnetischen Flusses (Φ) und zur Leitung des magnetischen Flusses (Φ), wobei zumindest ein Teil der Polelemente (5) des Stators (2) der Maschine aus magnetischem Sintermaterial besteht, **dadurch gekennzeichnet, dass** zumindest die im Wesentlichen parallel zur Drehachse (A) der Maschine verlaufenden Stege (7) der Polelemente (5) aus magnetischem Sintermaterial bestehen.

2. Transversalflussmaschine nach Anspruch 1, **dadurch gekennzeichnet, dass** zumindest die Pole (9) der im wesentlichen normal auf die Drehachse (A) der Maschine stehenden Schenkel (6) der Polelemente (5) aus magnetischem Sintermaterial bestehen.

3. Transversalflussmaschine nach Anspruch 1 oder 2, **dadurch gekennzeichnet, dass** ein Teil der Polelemente (5) des Stators (2) der Maschine aus lamellierten Blechen besteht, wobei die Lamellierungsebene im wesentlichen normal zur Drehachse (A) der Maschine steht.

4. Transversalflussmaschine nach Anspruch 3, **dadurch gekennzeichnet, dass** die zum Rotor (1) der Maschine weisenden Schenkel (6) der Polelemente (5) sowie ein Teil der im wesentlichen parallel zur Drehachse (A) der Maschine verlaufenden Stege (7) der Polelemente (5) des Stators (2) durch lamellierte Bleche gebildet sind.

5. Transversalflussmaschine nach Anspruch 4, **dadurch gekennzeichnet, dass** die in Richtung des Rotors (1) der Maschine weisenden Pole (9) der Polelemente (5) an deren Enden zur Bildung von Polschuhen gebogen sind.

6. Transversalflussmaschine nach einem der Ansprüche 3 bis 5, **dadurch gekennzeichnet, dass** die lamellierten Bleche zu Blechpaketen zusammengefasst sind, welche gegeneinander im wesentlichen um eine Polteilung (τₚ) oder ungeradzahlige Vielfache der Polteilung (τₚ) verdreht sind, wobei die Polteilung (τₚ) definiert ist durch das Verhältnis des wirksamen Umfangs zwischen Rotor (1) und Stator (2) zur Polzahl (2p).

7. Transversalflussmaschine nach einem der Ansprüche 1 bis 6, **dadurch gekennzeichnet, dass** die aus magnetischem Sintermaterial bestehenden Teile der Polelemente (5) des Stators (2) Ausformungen (10) zur Positionierung und Fixierung an den benachbarten Teilen des Stators (2) aufweisen.

8. Transversalflussmaschine nach Anspruch 1, **dadurch gekennzeichnet, dass** die gesamten Polelemente (5) des Stators (2) aus magnetischem Sintermaterial bestehen.

9. Transversalflussmaschine nach Anspruch 8, **dadurch gekennzeichnet, dass** die Polelemente (5) des Stators (2) mehrstückig hergestellt sind, wobei die einzelnen Teile der Polelemente (5) über komplementär gestaltete Ausformungen (10) miteinander verbunden sind.

10. Transversalflussmaschine nach Anspruch 8, **dadurch gekennzeichnet, dass** die Polelemente (5) des Stators (2) einstückig hergestellt sind.

11. Transversalflussmaschine nach einem der Ansprüche 8 bis 10, **dadurch gekennzeichnet, dass** die Schenkel (6) und/oder Stege (7) der Polelemente (5) in Richtung des Rotors (1) im wesentlichen keilförmig auseinanderlaufen und in Richtung der Pole (9) zusammenlaufen.

12. Transversalflussmaschine nach einem der Ansprüche 8 bis 11, **dadurch gekennzeichnet, dass** zwischen den Schenkeln (6) der Polelemente (5) Dämpfungseinlagen (12) aus elastischem Material, beispielsweise aus Gummi, angeordnet sind.

## Claims

1. Transversal flux machine having permanent magnets (3) arranged along the circumference of the rotor (1) of the machine and provided in a number which corresponds to the number of poles (2p) of the machine, and optionally having flux-guiding elements (4) made of magnetically conductive material arranged between the permanent magnets (3), and comprising pole elements (5) arranged along the circumference of the stator (2) of the machine for receiving coils (8) in order to produce a magnetic flux (Φ) and to guide the magnetic flux (Φ), wherein at least part of the pole elements (5) of the stator (2) of the machine consists of magnetic sinter material, **characterised in that** at least the webs (7) of the pole elements (5) consist of magnetic sinter material, said webs extending substantially in parallel to the rotational axis (A) of the machine.

2. Transversal flux machine according to claim 1, **characterised in that** at least the poles (9) of the legs (6) of the pole elements (5) consist of magnetic sinter material, said legs being oriented substantially perpendicular to the rotational axis (A) of the machine.

3. Transversal flux machine according to claim 1 or 2, **characterised in that** part of the pole elements (5) of the stator (2) of the machine consist of laminated metal sheets, wherein the plane of lamination is oriented substantially perpendicular to the rotational axis (A) of the machine.

4. Transversal flux machine according to claim 3, **characterised in that** the legs (6) of the pole elements (5) as well as part of the webs (7) of the pole elements (5) of the stator (2) are formed by laminated metal sheets, said legs pointing to the rotor (1) of the machine, said webs extending substantially in parallel to the rotational axis (A) of the machine.

5. Transversal flux machine according to claim 4, **characterised in that** the poles (9) of the pole elements (5) are curved at their ends to form pole shoes, said poles pointing in the direction of the rotor (1) of the maachine.

6. Transversal flux machine according to any one of claims 3 to 5, **characterised in that** the laminated metal sheets are combined to metal-sheets packages which are twisted against each other substantially by a pole pitch (τₚ) or by an odd-numbered multiplicity of the pole pitch (τₚ) wherein the pole pitch (τₚ) is defined by the ratio of the effective circumference between the the rotor (1) and the stator (2) to the pole number (2p).

7. Transversal flux machine according to any one of claims 1 to 6, **characterised in that** those parts of the pole elements (5) of the stator (2) which consist of magnetic sinter material have shaped portions (10) for positioning and fixing on the adjacent parts of the stator (2).

8. Transversal flux machine according to claim 1, **characterised in that** pole elements (5) of the stator (2) completely consist of magnetic sinter material.

9. Transversal flux machine according to claim 8, **characterised in that** the pole elements (5) of the stator (2) are produced to be multi-piece elements, wherein the individual parts of the pole elements (5) are connected with each other by complementary-designed shaped portions (10).

10. Transversal flux machine according to claim 8, **characterised in that** the pole elements (5) of the stator (2) are produced to be single-piece elements.

11. Transversal flux machine according to any one of claims 8 to 10, **characterised in that** the legs (6) and/or webs (7) of the pole elements (5) diverge in a substantially wedge-shaped way in the direction of the rotor (1) and converge in the direction of the poles (9).

12. Transversal flux machine according to any one of claims 8 to 11, **characterised in that** damping inserts (12) made of elastic material, e.g. rubber, are arranged between the legs (6) of the pole elements (5).

## Revendications

1. Machine à flux transversal, comportant des aimants permanents (3) disposés sur la périphérie du rotor (1) de la machine, en un nombre correspondant au nombre de pôles (2p) de la machine, et le cas échéant des pièces de guidage de flux (4) en matériau magnétique conducteur disposées entre les aimants permanents (3), et des éléments polaires (5) disposés sur la périphérie du stator (2) de la machine pour la réception d'enroulements (8), destinés à engendrer un flux magnétique (Φ) et à guider le flux magnétique (Φ), une partie au moins des éléments polaires (5) du stator (2) de la machine étant en matériau magnétique fritté, **caractérisée en ce qu'**au moins les barrettes (7) des éléments polaires (5), qui s'étendent pour l'essentiel parallèlement à l'axe de rotation (A) de la machine, sont en matériau magnétique fritté.

2. Machine à flux transversal selon la revendication 1, **caractérisée en ce qu'**au moins les pôles (9) des branches (6) des éléments polaires (5), qui sont sensiblement positionnés normalement à l'axe de rotation (A) de la machine, sont en matériau magnétique fritté.

3. Machine à flux transversal selon la revendication 1 ou 2, **caractérisée en ce qu'**une partie des éléments polaires (5) du stator (2) de la machine est constituée de tôles lamellaires, le plan de lamellation étant sensiblement positionné normalement à l'axe de rotation (A) de la machine.

4. Machine à flux transversal selon la revendication 3, **caractérisée en ce que** les branches (6) des éléments polaires (5) orientées vers le rotor (1) de la machine, ainsi qu'une partie des barrettes (7) des éléments polaires (5) du stator (2) s'étendant pour l'essentiel parallèlement à l'axe de rotation (A) de la machine, sont constituées de tôles lamellaires.

5. Machine à flux transversal selon la revendication 4, **caractérisée en ce que** les pôles (9) des éléments polaires (5) orientés en direction du rotor (1) de la machine sont recourbés au niveau de leurs extrémités pour la formation de pièces polaires.

6. Machine à flux transversal selon l'une des revendications 3 à 5, **caractérisée en ce que** les tôles lamellaires sont assemblées en paquets de tôles qui sont sensiblement décalés les uns par rapport aux autres d'un pas polaire (τₚ) ou d'un multiple impair du pas polaire (τₚ), le pas polaire (τₚ) étant défini par le rapport de la périphérie active entre le rotor (1) et le stator (2), rapporté au nombre de pôles (2p).

7. Machine à flux transversal selon l'une des revendications 1 à 6, **caractérisée en ce que** les parties constituées de matériau magnétique fritté des éléments polaires (5) du stator (2) comportent des conformations (10) pour le positionnement et la fixation sur les parties adjacentes du stator (2).

8. Machine à flux transversal selon la revendication 1, **caractérisée en ce que** tous les éléments polaires (5) du stator (2) sont en matériau magnétique fritté.

9. Machine à flux transversal selon la revendication 8, **caractérisée en ce que** les éléments polaires (5) du stator (2) sont réalisés en plusieurs parties, les différentes parties des éléments polaires (5) étant reliées entre elles par l'intermédiaire de conformations (10) agencées de façon complémentaire.

10. Machine à flux transversal selon la revendication 8, **caractérisée en ce que** les éléments polaires (5) du stator (2) sont réalisés d'un seul tenant.

11. Machine à flux transversal selon l'une des revendications 8 à 10, **caractérisée en ce que** les branches (6) et/ou les barrettes (7) des éléments polaires (5) divergent sensiblement de façon cunéiforme en direction du rotor (1), et convergent en direction des pôles (9).

12. Machine à flux transversal selon l'une des revendications 8 à 11, **caractérisée en ce que** des inserts d'amortissement (12) en matériau élastique, par exemple en caoutchouc, sont disposés entre les branches (6) des éléments polaires (5).
